Europäisches Patentamt

(19) European Patent Office

Office européen des brevets

(11) Publication number: **0 055 126**
**B1**

(12) **EUROPEAN PATENT SPECIFICATION**

(45) Date of publication of patent specification: 07.05.86

(51) Int. Cl.⁴: **G 06 F 5/00**

(21) Application number: 81306040.7

(22) Date of filing: 22.12.81

(54) **High-speed byte shifting apparatus.**

(30) Priority: 23.12.80 US 219768
23.01.81 US 227859

(43) Date of publication of application:
30.06.82 Bulletin 82/26

(45) Publication of the grant of the patent:
07.05.86 Bulletin 86/19

(84) Designated Contracting States:
DE FR GB IT

(56) References cited:
US-A-3 781 797
US-A-3 996 566
US-A-4 128 872
US-A-4 165 533

IBM TECHNICAL DISCLOSURE BULLETIN, vol.
20, no. 4, September 1977, pages 1544-1547,
New York, USA K. CASH et al.: "N-chip
cascadable shift register with parity predictor"

(73) Proprietor: SPERRY CORPORATION
1290, Avenue of the Americas
New York, N.Y. 10019 (US)

(72) Inventor: O'Brien, Steven Michael
910 Capitol Road
Norristown, Pa. 19403 Montgomery (US)

(74) Representative: Orchard, Oliver John
JOHN ORCHARD & CO. Staple Inn Buildings
North High Holborn
London WC1V 7PZ (GB)

## Description

This invention relates to byte shifting apparatus for high speed bus architecture data processing systems.

Shifting of bits, bytes and words of data are necessary functions of modern data processing systems. Data transferred to or from a main storage unit (MSU) may need to be shifted right or left in more than ninety percent of transfers.

In the prior art shifting has been accomplished in various ways. The most common way to shift both bits and bytes of data is to employ the shift register technique, in which data loaded into a shift register are shifted one register position at a time by clock pulses. While shift registers are effective means to shift a bit one or two positions, as would be required in adders, they are complex and slow if employed with bus architecture data processing systems, which employ large numbers of bits or bytes in parallel to form a single data word.

When bits of data are stored in one register, they can be transferred in parallel to a second register. If the shift requirements are fixed, the connections between the two registers can also be fixed or hard wired. Hard-wiring shift operations are well known, and have the advantage that shifting is accomplished at high speeds. They are employed in adders.

A variation of hard wire shifting from one register to another is accomplished in a barrel shifter or in a multibit shift matrix. Such logic circuits are now commercially available as semiconductor devices or as chips which contain the bit shift matrix lines and some external control circuitry. Such devices provide a plurality of alternative paths connected between a plurality of registers. As the number of shift positions is increased, the number of registers also increases, by a factor greater than two. When multi-bit matrix shifters are adapted to shift bytes, not only does the number of registers increases greatly, but the logic for accommodating the shift paths also increases greatly and the speed of shifting slows down.

It has been suggested that a source register could be connectable to any one of a plurality of buffer registers, one for each possible shift position, through a matrix or a multiplexer circuit arrangement. This would be equivalent to providing a hard-wired transfer once proper selection of the gating circuitry logic is made. Selection would be slow, regardless of the logic employed and the requirement for numerous registers and/or complex logic would be expensive.

In the following description, a data word comprises a plurality of bytes and a byte comprises a plurality of data bits and a parity bit. The text and drawings, by way of example, will refer to a data word having four bytes, each consisting of eight data bits and one parity bit.

Data processing systems which transfer data bytes in parallel also transfer the parity bit in parallel with the data. The parity bit provides means for checking the most common type of error, which is the change of one data bit in the data byte. When the bytes of data are being shifted in parallel, the parity bit error detection does not detect a shift error, nor does the parity bit detect that the byte being transferred from the data bus to a byte shifter is, in fact, the byte which should have been selected for shifting. After a byte has been selected for shifting from a data bus, it must be returned to the data bus in shifted form. Prior art byte shifters have not treated the problems of byte selection error or shifted byte transfer error which could occur in byte shifters.

Data processing systems which employ data bus architecture also employ input and output registers to present and receive bytes and words of data information on the data bus. Byte shifters must take byte data from the data bus and return it after it has been processed. Even if the byte shifter is operable to effect the proper shift operation on the proper byte, the parity check bit of the data byte cannot be employed as a means to check that the shifted byte in the byte shifter is transferred to the proper input or output register of the data bus. If the byte in the data bus register is not changed by loading a new byte, the old byte which remains unchanged still has a proper parity bit, thus absence of a proper transfer or loading of the new byte is not detected.

It is generally recognized that the errors in data processing systems are more likely to occur when data are being transferred between registers. When byte shifters are employed which are not hard-wired, the probability of error increases greatly. When byte shifters are employed which employ complex logic and large number of gates in matrix form, the probability of error also increases. When the speed of operation of the data processing system is very high, the inclusion of complex circuitry not only slows down the operation of the byte shifter, but also increases the probability of data selection errors and data transfer errors.

For further background information, reference may be made to US patents US—A—3996566 and US—A—4128872. The former describes a high speed data shifter comprising a plurality of data shifters arranged in any array, each of which can shift data from 1 to 15 positions. The latter describes a shift and rotate circuit in which a word to be shifted is written byte-by-byte into a first memory in a first order and into a second memory in a second order and in which the content of both memories is applied to a shift and rotate circuit.

It is an object of the present invention to provide a high speed byte shifter which is adapted to a bus architecture high speed data processing system and which is operable at high speed, reliable, and which, in its preferred form, includes adequate error checking, and which avoids excessively complex circuitry.

This object is achieved by the present invention, which is defined in the claims appended hereto.

An embodiment of the invention will be described by way of example, with reference to the accompanying drawings, in which:—

Figure 1 is a schematic block diagram of a bus architecture data processing system showing byte shifters according to the present invention.

Figure 2 is an enlarged schematic block diagram of two of the byte shifters shown in Figure 1;

Figure 3 is a detailed logic block diagram of one of the byte shifters shown in Figures 1 and 2; and

Figure 4 is a detailed logic block diagram of checking circuits used in the invention.

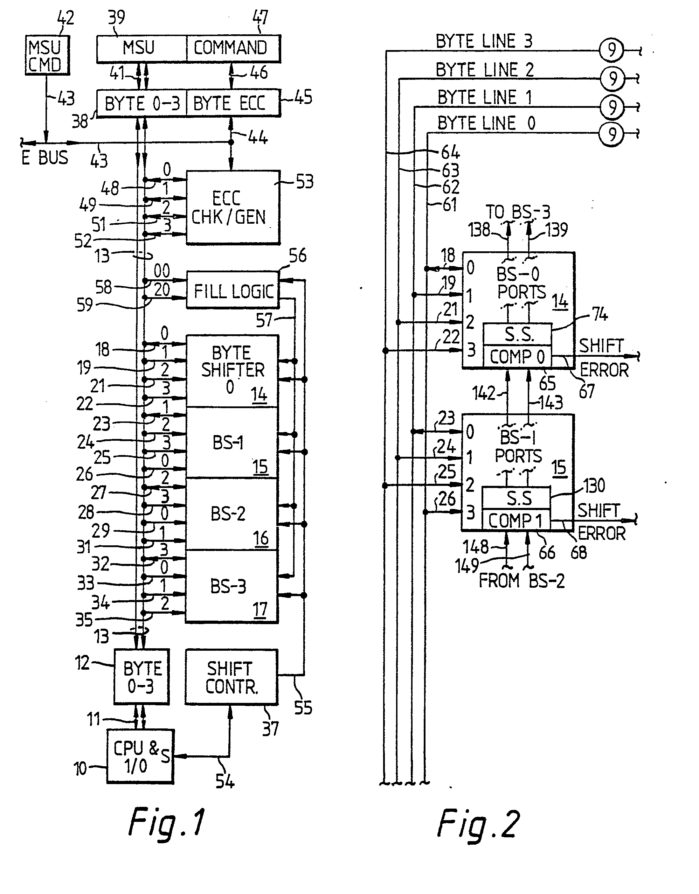

Referring first to the schematic block diagram of Figure 1, a CPU and I/O system 10 presents a data word on a data bus 13 by way of a parallel bus 11 and a buffer register 12. In the present embodiment it will be assumed that a data word comprises four bytes, and each byte comprises eight data bits plus one parity bit, so that thirty-six bits in parallel are presented on the four byte lines of data bus 13 (i.e. each byte line comprises nine parallel bit lines). Four byte shifters, 14, 15, 16 and 17, are each connected by a set of four byte lines to the four byte lines of the data bus 13, so that byte shifter 14 is connected to the four byte lines of the bus 13 by byte lines 18, 19, 21 and 22, byte shifter 15 by byte lines 23 through 26, byte shifter 16 by byte lines 27 to 29 and 31, and byte shifter 17 by byte lines 32 to 35. As will be explained hereinafter, only one of each set of four byte lines will be selected and operative at any one time to supply data to its byte shifter. A shift controller 37 controls the byte shifters 14 through 17 in such a way as to select one of the input byte lines of each byte selector so as to cause each of the four bytes on data bus 13 to be stored in a different one of the four byte shifters in a sequence representing the required shift. The bytes stored in the byte shifters 14 through 17 are then returned to the bus 13 by way of the input-output lines 18, 23, 27 and 32 in the required shifter sequence, from which they may be applied to the byte buffer register 38, and thence to the main storage unit 39 via a bus 41. It will be understood that before supplying the data on the bus 41 to the main storage unit 39, an address will have been supplied via bus 13 through byte register 38 to the main storage unit 39, and a command will have been supplied from a command register 42 via buses 43 and 44 through a byte error register 45 and a bus 46 to the command logic 47 which is part of the main storage unit controller. When the data to be stored are applied on the data bus 13 to the byte register 38, the eight data bits and the parity bit of each byte are presented on a set of byte lines 48, 49, 51 and 52 to an error correction code checking and generator logic 53. When data is written into the main storage unit 39, the logic 53 generates an error correction code (ECC) byte of the Hamming type, and this is also supplied via the bus 44 to the byte register 45, thence to the command logic 47, which stores the ECC byte at the proper address in the main storage unit 39, together with the data presented on the bus 41.

Data in the main storage unit 39 may also be retrieved and supplied to the CPU and I/O's 10 after being processed in the byte shifters 14 through 17 under control of the shift controller 37. While shift controller 37 may receive the necessary information to generate its commands from various sources, a primary source is the CPU and I/O's 10 via a line 54. This information is processed in the controller 37 and the resulting commands presented to the byte shifters via the line 55.

As previously explained, each of the byte registers 12 and 38 is capable of storing four bytes of eight data bits and one parity bit to provide a thirty-six bit parallel array on data bus 13. In the preferred mode of operation of the system, it may be desired that the system operate in a mode which requires fewer than four bytes. For example, if the CPU and I/O's 10 were reading information out of the main storage unit 39 and for reasons of security or processing were only programmed to receive one byte of information, the remaining three bytes would be filled with zeros by the fill logic 56 via line 57.

As another example, in an arithmetic process it is often desirable to provide extension of the sign bit to permit processing of a full word. The information necessary to fill these sign bits is supplied on lines 58 and 59 to the fill logic 56. Thus, it will be understood that the fill logic 56 is capable of fill operations from data supplied from the main storage unit 39 or from instructions and commands which originate in the CPU 10 and the shift controller 37.

Data presented on data bus 13 for storage in the main storage unit 39 after being shifted may require to be shifted in a similar or reverse manner upon retrieval for presentation to the CPU and I/O's 10.

The CPU 10 does not always known in advance the amount and direction of the shift required. If no shift were required and if detection means were provided, the data in byte register 12 could be transferred to the byte register 38 and bypass the byte shifters 14 through 17. In the present invention, the time required for the shifting operation is so minimal and the percentage of times that the shifting operation is required is so great, that the byte shifters may be employed for an operation in which no shift is required, rather than providing bypass and detection logic, which would slow down the operation and increase the cost.

Figure 2 is a schematic block diagram of the byte shifters 14 and 15, which are connected to the individual byte lines through input ports 0 to 3. The data bus 13 comprises four byte lines for byte 0 through byte 3, respectively numbered 61 through 64. The numbering of the bytes indicates the sequence in which they are stored in the buffer registers 12 and 38. The byte lines 18, 19, 21 and 22 constitute the ports 0 to 3, and are connected to corresponding byte lines 61 through 64 of the bus 13, so that byte line 18, for example, will present byte 0 from register 12 or register 38 to the input port 0 of the byte shifter 14, which is shown also as byte shifter BS—O. In similar manner, byte 1 is presented via byte line 62 and input byte line 19 to input port 1 of byte shifter 14, and similarly for the other bytes, so that each of the four byte shifters 14 through 17 has available all four of the bytes in registers 12 and 38. As will be explained in detail hereinafter, only one of these bytes will be processed through each of the byte shifters 14 through 17 in a shift operation. The byte shifter 15 has four input byte lines, 23 through 26, also connected to the same four byte lines 61 through 64, but in a different sequence. In this byte shifter, the input byte line 23 is connected to byte line 62 so that the number 1 byte on the data bus 13 is available at the 0 input port, the number 2 byte at the 1 input port, the number 3 byte at the 2 input port, and the 0 byte at the 3 input port. The connection to the ports of the shifters 16 and 17 are each further transposed in a similar cyclic manner. By hard wiring the byte lines 61 to 64 in this way to different input ports of the byte shifters, the logic for selecting a byte from data bus 13 is simplified. Another advantage is that the byte shifters may be identical, thus reducing the cost of manufacture of the shifters.

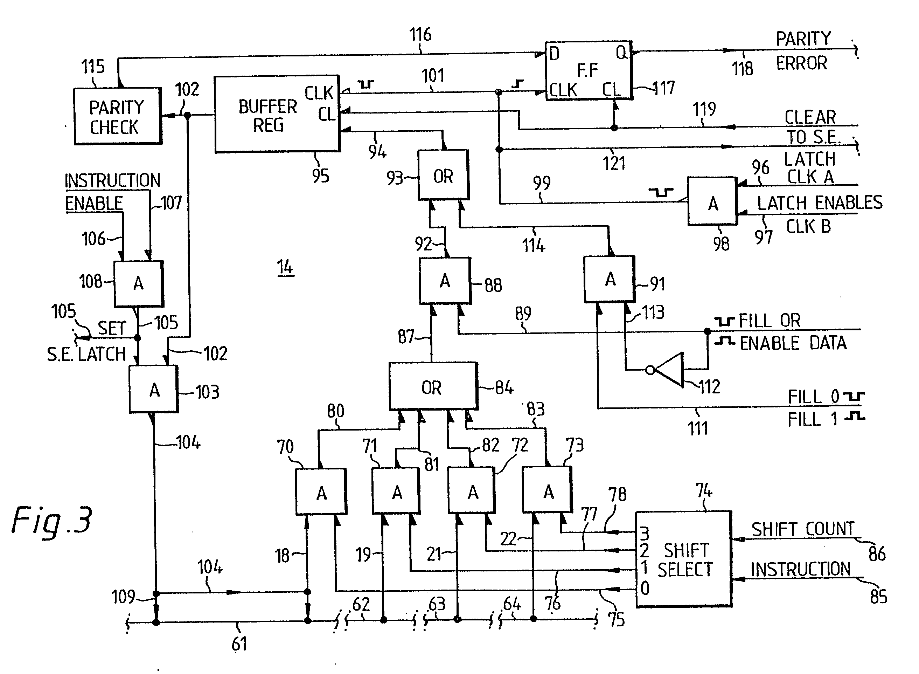

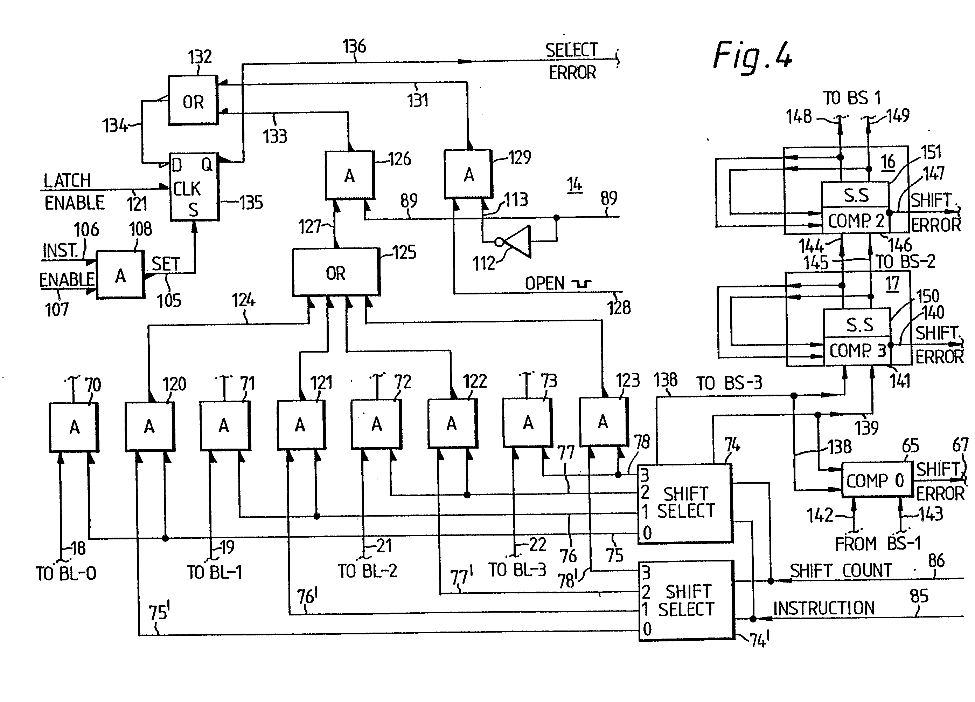

Comparators 65 and 66 are provided in the byte shifters 14 and 15 for detecting shift errors, which are indicated by signals on lines 67 and 68 as will be explained below with reference to Figures 3 and 4.

Figure 3 is a more detailed diagram of one of the byte shifters of Figures 1 and 2, such as 14. The four input ports, 0 to 3 are shown by AND gates 70 through 73. The input data lines 18, 19, 21 and 22 are connected respectively to the byte lines 61 through 64 which, in turn, are connected to the 0 to 3 bytes of byte registers 12 and 38 as explained above. Thus, byte 0 on input byte line 18 represents nine bits in parallel, and AND gate 70 represents nine AND gates for one byte. Similarly, byte 1 on line 19 is presented to AND gate 71 which represents nine AND gates. One of the AND gates 70 to 73 is enabled by a shift select means 74, which activates only one of the port enable lines 75 through 78. Thus, when byte shifter 14 selects byte zero on line 61, the input port AND gate 70 must be enabled by the 0 port enable line 75, or when byte 3, on line 64, is to be selected, the port 3 enable line 78 must be activated to provide an output from the AND gate 73.

During a shift operation, a different one of the bytes on the data bus 13 is selected for transmission into each byte shifter through its AND gates 70 through 73, and is presented on lines 80 through 83 to an OR gate 84. The instruction to shift right or shift left on line 85, and the number of positions to be shifted on line 86 will determine which AND gate 70 to 73 is selected.

The output from OR gate 84 on line 87 is presented to AND gate 88 which is normally enabled via line 89, as shown by the positive "enable data" pulse. When a fill operation is being conducted for the byte selected by the byte shifter 14, a negative "fill" pulse blocks AND gate 88 and enables AND gate 91.

Data on output line 92 are passed via line 94 through an OR gate 93 and presented to the data input of a buffer register 95. In order to clock the data into this register, a clocking signal must be present, and this is derived from the AND gate 98 via the lines 99 and 101. One input to this gate, clock A on line 96, may be an instruction or a signal derived from the shift controller 37. The other input, clock B on line 97, is a timing pulse for coordinating the signals. When these two low input signals on lines 96 and 97, are present, a low output clock pulse on lines 99 and 101 clocks the data into the buffer register 95. It will be understood that once an input port 70 to 73 is selected, the byte on the data bus 13 is immediately stored in buffer register 95 and no logical processing is necessary. Stated differently, byte shifter 14 has available at its input ports each of the four bytes on data bus 13 and through logic determination can store any one of the bytes zero to three in buffer register 95. Further, it will be understood that byte shifters 15 through 17 will simultaneously be selecting a different data byte and storing its data byte in a buffer register 95 identical to the register 95 for byte shifter 14.

Referring now also to Figures 1 and 2, when the input port 0 of the byte shifter 14 is selected by its line 75 enabling its AND gate 70, the 0 port of byte shifter 15 is also selected, which cause byte 1 on byte line 62 to be stored in its buffer register, while the byte 0 on line 61 is stored in the buffer register 95 of byte shifter 14. In similar manner, as shown schematically in Figure 1, the section of input port zero is made at each of the byte shifters 14 through 17 so that the byte shifter 16 will select byte 2 from byte line 63 and byte shifter 17 will select byte 3 on byte line 64.

For purposes of explanation, assume that input port 1 select line 76 is activated, so that byte shifter 14 selects byte 1 on byte line 62 and stores it in its buffer register 95. Thus, byte 1 in register 95 of Figure 3 is available at the Q output on line 102 at the input of AND gate 103 and will be presented on the return byte line 104 when the gate 103 is enabled by a signal on line 105, which provides the second input to the AND gate 103. Typical enabling inputs are instruction inputs on line 106 from shift controller 37, and clocking and enabling inputs on line 107 similar to those explained with regard to the latch enables on lines 96 and 97. The inputs on lines 106 and 107 are applied to an AND gate 108 to generate the enable pulse for the AND gate 103. These inputs are controlled by the control means including the shift controller 37. Before the AND gate 103 is enabled, the data on byte lines 61 to 64, originally presented by the byte register 12 or 38, are removed. The logic for removing these byte data is known in the art as typical of bus architecture data processing sytems, and does not require explanation for purposes of this invention. The return byte line 104 is preferable connected to the input byte line 18 to provide an input-output byte line, which can easily be provided internally on the byte shifter semiconductor chip to save pin connections and wiring.

As shown at line 109, the return byte line 104 may be connected individually to byte line 61 which would be the same byte line connection made by the line 18. In summary, when byte 1 on byte line 62 is selected by enabling AND gate 71, byte 1 is stored in the buffer register 95 and when the AND gate 103 is enabled, this byte is returned via byte return line 104 to byte line 0, thus, effecting a left shift of the byte. Similarly, when input port 1 is selected, each of the remaining byte shifters 15, 16 or 17, also causes a left shift by one byte of each of the bytes 2, 3 or 0 is effected simultaneously. Any combination of shift direction and byte positions can be produced by suitably instructing shift select means 74.

One of the features of the present invention referred to hereinbefore is that during the simultaneous shifting of bytes, any of the bytes stored in its register 95 may be blocked and replaced by a fill of all of its bit positions with either a zero or one, whichever is supplied on the fill line 111. The enable pulse on line 89, which enabled the data to pass through the AND gate 88, is inverted at an inverter 112 to provide a blocking pulse on line 113, so that the AND gate 91 is disabled. However, when the low or fill pulse occurs on line 89, the AND gate 88 is blocked and the AND gate 91 is enabled, so that the fill data supplied on the line 114 to the OR gate 93 is presented to the data input of the buffer register 95 via the line 94.

The data at the output of the buffer register 95 after the clock input on line 101 are checked by the parity check means 115 which computes the parity of the data digits and compares it with the parity bit in buffer register 95. If no bit error has occurred in the data, the output on the parity check line 116 will present a low input to the data input of a flip-flop 117. The same clock pulse on line 101 which clocks the data into buffer register 95 also provides a trailing edge trigger at the clock input of the flip-flop 117. If a low input is on line 116, indicative of a correct parity check, a low output occurs at the Q output of flip-flop 117; however, if a high data input is on line 116 when the trailing edge of the clock pulse on line 99 appears at the clock input of flip-flop 117, a parity error signal will be produced at the Q output of the flip-flop 117 on line 118. Preferably, line 118 is connected to the shift controller 37 but may be supplied to other appropriate logic means. The buffer register 95 and the flip-flop 117 are cleared by a clear pulse on line 119 when initializing the system or when clearing errors. It is not necessary to clear buffer register 95 between byte shift operations.

The same clock pulse on line 99 is also provided by line 121 for clocking the select error (SE) latch, as will be explained with reference to Figure 4. The SE latch is set by the enable pulse on line 105, which was employed to enable the contents of the buffer register 95 to be presented on the return byte line 104.

Figure 4 shows, in greater detail, the error checking means for the byte shifters, and, in particular, it comprises the major portion of the error checking circuits of the byte shifter 14, and some elements of the byte shifters 16 and 17. The parity error checking circuit shown in Figure 3 is a standard parity error check implemented with novel structure and the error checking structure of Figure 4 is considered to be new structure and new method of checking.

There are three further types of check shown in Figure 4. First, there is a check to make sure that the correct byte has been selected for storage in the buffer registers 95. Second, there is a check between the different byte shifters to determine that the byte shifters are all making the same proper selection. Third, there is a check procedure to determine the new data is being stored in buffer register 95.

The possible causes of errors in high speed data processing systems are numerous. They include failures due to improper connections or device failures, and intermittents, which can be caused by power surges and other non-recurring conditions. The shift select means 74 in Figure 4 with its port enable lines 75 to 78 is the same shift select means shown in Figure 3, which enables the AND gates 70 to 73 of the input ports of the byte shifter 14. These AND gates are shown in Figure 4 for purposes of continuity of explanation only. The port select lines are also connected to further AND gates, 120 through 123. The AND gate 120 is a single AND gate, and not nine AND gates, as the AND gate 70 explained above. The AND gate 120 being connected to the input port enable line 75, like AND gate 70, is enabled when the shift select means 74 is on the count of zero. A second identical shift select means 74' is provided, and has similar input port select lines 75' to 78'. When the two shift select means 74 and 74' are operating correctly, the enable lines 75 and 75' to the AND gate 120 generate an output on the line 124 which passes through an OR gate 125 and enables an AND gate 126 via a line 127. The AND gate 126 is also enabled by the enable data line 89, which is also shown on Figure 3. The enable signal on the line 89 passes through inverter 112 and generates a blocking condition on a line 113 at the input of an AND gate 129. The second input to the AND gate 129 on line 128 is open, so that it is permanently enabled. Consequently, when line 113 is enabled, indicating that a fill operation is taking place, the AND gate 129 generates an output on line 131 to the OR gate 132. Thus, a signal on line 133 indicates of proper selection of the correct byte line and proper operation of the select means 74, 74', and generates a low output on the line 134 from the gate 132, which is applied to the data input of a latch 135. The signal on line 134 is high if a selection error has occurred. A selection error latch clock signal is supplied on line 121, after the signal on line 134 has become stable, and if an error signal is present on latch 135, there is a high output at the Q output of the latch 135 on the line 136, indicating a select error.

If the signal on the line 134 is low, the clock does not generate a high signal at the Q output line 136.

The AND gate 108, as described above with reference to Figure 3, generates a signal on the line 105 when the instruction and enables signals on lines 106 and 107 are present to enable the contents of the buffer register 95 to be presented on the return byte line 104. The same signal also sets the selection error latch 135 and this latch must be reset by the clocking signal on line 121, which indicates that data have been clocked into the buffer register 95. Stated differently, the latch 135 performs two functions. First, it indicates that the proper selection has been made via shift select means 74 and 74'. Also, the logic which reads the data out of buffer register 95 is employed to set an error condition in latch 135. When the set signal on line 105 is applied to latch 135, the Q output goes high on line 136, which would indicate a select error; however, the logic is not reading the line 136 for an error at this time. When the 'no error' signal on line 134 is applied to the data inputs of line 135 together with the AND gate functions of the clock line 121, the Q output of latch 135 goes low. The select error line 136 determines that two things have occurred; first, that the correct selection has been made, and second, that the new data have been applied to the buffer register 95 by the clock on line 121. This clock also sequentially clocks the parity error check signal to flip-flop 117 on the line 99. Thus the clock pulse shown in Figure 3 at line 101 and line 121 initiates three error checks.

The final checking means shown on Figure 4 is also partially shown on Figure 2 and comprises a check to determine that the shift select means in all the byte shifters are performing the same select operation. This feature will determine whether the instruction on line 85 and the shift count on line 86 is the same at all of the byte shifters. Further, this will detect errors in the shift select means not found by the previous error checking circuits. The shift count on line 86 and the instruction on line 85 applied to the shift select means 74 and 74' is binarily encoded applied by lines 138 and 139 to the comparator 65 in the byte shifter 14 and the comparator 141 in the byte shifter 17. The same binary encoded information also appears on lines 142 and 143 from the shift select means 130 of byte shifter 15 as shown in Figure 2 as well as Figure 4. When the information in comparator 65 indicates that the setting of the shift select means 74 in the byte shifter 14 and that of the shift select means 130 in the byte shifter 15 correspond, the binary encoded information will be identical, and the comparator 65 will generate a 'no error' condition on line 67. However, when there is a discrepancy between the binary information on lines 138 and 139 being compared with the information on lines 142 and 143, a shift error signal will be produced on line 67. Similarly, the binary information on lines 138 and 139 is supplied to the comparator 141 of the byte shifter 17 and when the binary information on lines 144 and 145 from the shift select means 150 of the byte shifter 17 corresponds, the comparator 141 will not create an error signal on line 140. However, when the binary information differs between the shift select means 74 and 150 of byte shifters 14 and 17 a shift error will appear on line 140. In similar manner, the setting of the shift select means 150 of the byte shifter 17 is supplied via lines 144 and 145 to comparator 146 which also has an input from its shift select means 151 in the byte shifter 16 and when the binary information on lines 144 and 145 compares with the binary information on lines 148 and 149, no error condition will appear on shift error line 147.

Having explained the Figure 4 error checking circuits in detail, it will now be understood that the byte shifters 16 and 17 on Figure 4 may be connected to the byte shifters 14 and 15 shown in Figure 2 to complete the comparison error checking circuits. In the preferred embodiment of the present invention error checking circuits, the shift error signals and select error signals, as well as the parity error signals, are returned to the shift controller 37, but they could be applied to the other types of controllers and maintenance panels.

It will be understood that only one buffer register 95 is provided in each of the byte shifters, and that the byte lines 61 to 64 in the data bus 13 are effectively hard-wire connected to the buffer registers 95. The speed of the apparatus depends on the type of device selected. When the logic circuits are implemented with high speed ECL and Schottky $T^2L$ the shift operation is performed in mere nanoseconds. While all of this transfer and readout is occurring, the error checking operation is carried out virtually simultaneously, because the error checking is occurring as an "always present" or "always on" condition.

## Claims

1. High speed byte-shifting apparatus for shifting bytes of data presented on a bus having a plurality of byte lines, each byte line comprising a plurality of data and parity bit lines, said apparatus comprising a plurality of byte shifters (14, 15, 16, 17), one for each byte line (61, 62, 63, 64), each provided with a buffer register (95) and with a set of input ports (18, 19, 20, 22; 23, 24, 25, 26; 27, 28, 29, 31; 32, 33, 34, 35) the ports of each set being connected to each byte line in a different sequence representing shifts of different numbers of bytes, each byte shifter (14, 15, 16, 17) having a return port (18, 23, 27, 32) connected to its corresponding byte line; the apparatus also comprising shift control means (37) arranged in response to a command signal to select the appropriate input port in each byte shifter (14, 15, 16, 17) so as to cause each shifter to store a different byte in its buffer register (95) and to return it to the bus through its return port (18, 23, 27, 32).

2. High speed byte-shifting apparatus according to Claim 1 provided with fill logic means (56) whereby in selected byte-shifters gating circuits (91, 93, 111, 112) may be caused to fill the buffer register (95) with ones or zeros for return to the bus.

3. High speed byte-shifting apparatus according to Claim 1 or Claim 2 in which, in each byte shifter (14, 15, 16, 17), the signal from the shift control (37) is applied to a shift select circuit (74) providing output signals controlling the input port gates (70, 71, 72, 73) and the output signals are applied, together with outpout signals from a second shift select cirucit (74'), to gating circuits (120, 121, 122, 123) to provide a shift select error signal indicating whether or not a port has been selected.

4. High speed byte-shifting apparatus according to Claim 3 provides with an error-determining latch flip-flop (135) in each byte shifter (14, 15, 16, 17), which is set by the signal which gates the return of the contents of the buffer (95) to the bus, is clocked by a signal from the shift controller (37), and has as its data input (134) the shift select error signal.

5. High speed byte-shifting apparatus according to any preceding claim in which each byte shifter (14, 15, 16, 17) includes means for encoding the input signals applied to its shift select circuit (74) and applying them to a comparator (65, 141), together with corresponding signals from the next byte shifter so as to generate a shift error signal if the compared signals fail to agree.

6. High speed byte-shifting apparatus according to any preceding claim in which each byte shifter (14, 15, 16, 17) includes parity check logic (115) checking the parity of the contents of the buffer register (95), the parity error signal from the parity check logic being gated by the trailing edge of the pulse which loads the buffer register (95).

**Patentansprüche**

1. Mit hoher Geschwindigkeit Bitgruppen verschiebendes Gerät zum Verschieben von Datentbitgruppen, die auf einer Sammelleitung aus mehreren durch Daten- und Paritäts-Bitleitungen aufgebauten Bitgruppen-Leitungen dargeboten werden, mit mehreren Bitgruppenschiebern (14, 15, 16, 17), von denen jeweils einer für jede Bitgruppenleitung (61, 62, 63, 64) vorgesehen und mit einem Pufferregister (95) und einem Satz Eingägen (18, 19, 20, 22; 23, 24, 25, 26; 27, 28, 39, 31; 32, 33, 34, 35) versehen ist, wobei die Eingänge jedes Satzes mit allen Bitgruppen-Leitungen in einer anderen Folge verbunden sind, die Verschiebungen einer unterschiedlichen Zahl von Bitgruppe wiedergibt, und jeder Bitgruppenschieber (14, 15, 16, 17) einen an seiner entsprechenden Bitgruppenleitung angeschlossenen Rückführeingang (18, 23, 27, 32) aufweist, sowie mit Verschiebungssteuer-Hilfsmitteln (37), die zum Ansprechen auf ein Befehlssignal angeordnet sind, um den passenden Eingang an jedem Bitgruppenschieber (14, 15, 16, 17) zu wählen, so daß jeder Schieber zum Speichern einer anderen Bitgruppe in seinem Pufferregister (95) und zu ihrer Rückführung auf die Sammelleitung durch seinen Rückführeingang (18, 23, 27, 32) veranlaßt wird.

2. Mit hoher Geschwindigkeit Bitgruppen verschiebendes Gerät gemäß Anspruch 1, das mit logischen Fülleinrichtungen (56) versehen ist, wobei in gewählten Bitgruppenschiebern Verknüpfungsglieder (91, 93, 111, 112) zur Füllung des Pufferregisters (95) mit Einsen oder Nullen veranlaßt werden können, um diese zur Sammelleitung zurückzuführen.

3. Mit hoher Geschwindigkeit Bitgruppen verschiebendes Gerät gemäß Anspruch 1 oder Anspruch 2, bei dem in jedem Bitgruppenschieber (14, 15, 16, 17) das Signal aus der Verschiebungs-Steuerung (37) einer Verschiebe-Wahlschaltung (74) zugeleitet wird, deren Ausgangssignale die Eingangsverknüpfungsglieder (70, 71, 72, 73) einstellen und gemeinsam mit den Ausgangssignalen aus einer zweiten Verschiebe-Wahlschaltung (74') Verknüpfungsgliedern (120, 121, 122, 123) zugeführt werden, um ein Verschiebewahl-Fehlersignal herbeizuführen, das anzeigt, ob ein Eingang gewählt worden ist oder nicht.

4. Mit hoher Geschwindigkeit Bitgruppen verschiebendes Gerät gemäß Anspruch 3, das in jedem Bitgruppenschieber (14, 15, 16, 17) mit einem Fehler bestimmenden Halte-Flipflop (135) versehen ist, das von dem Signal, das den Inhalt des Puffers (95) durch Verknüpfungsglieder zur Sammelleitung zuruckführt, gesetzt und von seinem Signal aus der Verschiebungs-Steuerung (37) getaktet wird und als seinen Dateneingang (134); das Verschiebewahl-Fehlersignal erhält.

5. Mit hoher Geschwindigkeit Bitgruppen verschiebendes Gerät gemäß einem vorhergehenden Anspruch, bei dem jeder Bitgruppenschieber (14, 15, 16, 17) Hilfsmittel zur Codierung der seiner Verschiebe-Wahlschaltung (74) zugeführten Eingangssignale und zu ihrer Heranführung an einen Komparator (65, 141) aufweist, die gemeinsam mit entsprechenden Signalen aus dem nächsten Bitgruppenschieber erfolgt, um ein Verschiebungs-Fehlersignal zu erzeugen, falls die verglichenen Signale nicht übereinstimmen.

6. Mit hoher Geschwindigkeit Bigruppen verschiebendes Gerät gemaß einem vorhergehenden Anspruch, bei dem jeder Bitgruppenschieber (14, 15, 16, 17) eine Paritäts-Prüflogik (115) aufweist, von der die Parität des Inhaltes des Pufferregisters geprüft wird, wobei das Paritäts-Fehlersignal aus der Paritäts-Prüflogik durch Verknüpfungsglieder von der Rückflanke desjenigen Impulses hindurchgelassen wird, der das Pufferregister (95) beladet.

**Revendications**

1. Appareil de décalage de multiplets à grande vitesse permettant de décaler des multiplets de données présentés sur un bus comprenant une pluralité de lignes de multiplets, chaque ligne de multiplets comprenant une pluralité de lignes de bit de parités et de données, ledit appareil comprenant une pluralité de décaleurs de multiplets (14, 15, 16, 17), un pour chaque ligne de multiplets (61, 62, 63, 64), chacun étant doté d'un registre tampon (95) et d'un groupe de canaux d'entrée (18, 19, 20, 22; 23, 24, 25, 26; 27, 28, 29, 31; 32, 33, 34, 35) les canaux de chaque groupe étant reliés à chaque ligne de multiplets selon une séquence différente représentant des décalages de nombres différents de multiplets, chaque décaleur de multiplets (14, 15, 16, 17) ayant un canal de retour (18, 23, 27, 32) relié à sa ligne de multiplets correspondante; l'appareil comprenant en outre des organes de contrôle de décalage (37) aptes, en réponse à un signal de commande, à sélectionner le canal d'entrée approprié de chaque décaleur de multiplets (14, 15, 16, 17) pour amener chaque décaleur à stocker un multiplet différent dans son registre tampon (95) et à le retourner au bus par son canal de retour (18, 23, 27, 32).

2. Appareil de décalage de multiplets à grande vitesse selon la revendication 1, comprenant des moyens logiques de remplissage (56) de sorte que, dans des décaleurs de multiplets sélectionnés, les circuits de sélection (91, 93, 111, 112) peuvent être amenés à remplir le registre tampon (95) avec des 1 ou des 0 pour le retour au bus.

3. Appareil de décalage de multiplets à grande vitesse selon la revendication 1 ou la revendication 2, dans lequel, dans chaque décaleur de multiplets (14, 15, 16, 17), le signal du contrôleur de décalage (37) est appliqué à un circuit de sélection de décalage (74) délivrant en sortie des signaux contrôlant les ports des canaux d'entrée (70, 71, 72, 73) et les signaux de sortie sont appliqués, avec des signaux de sortie d'un second circuit de sélection de décalage (74'), à des circuits de sélection (120, 121, 122, 123) pour fournir un signal d'erreur de sélection de décalage indiquant si un canal a été sélectionné ou non.

4. Appareil de décalage de multiplets à grande vitesse selon la revendication 3 comprenant une bascule de verrouillage de détermination d'erreur (135) dans chaque décaleur de multiplets (14, 15, 16, 17), laquelle est mise au niveau 1 par un signal qui sélectionne le retour du contenu du tampon (95) vers le bus, et synchronisée par un signal provenant du contrôleur de décalage (37) et a comme entrée de données (134) le signal d'erreur de sélection de décalage.

5. Appareil de décalage de multiplets à grande vitesse selon l'une quelconque des revendications précédentes, dans lequel chaque décaleur de multiplets (14, 15, 16, 17) comprend des moyens destinés à encoder les signaux d'entrée appliqués à son circuit de sélection de décalage (74) et à les appliquer à un comparateur (65, 141), avec des signaux correspondants provenant du décaleur de multiplets suivant de façon à produire un signal d'erreur de décalage si les signaux comparés ne concordent pas.

6. Appareil de décalage de multiplets à grande vitesse selon l'une quelconque des revendications précédentes dans lequel chaque décaleur de multiplets (14, 15, 16, 17) comprend une logique de contrôle de parité (115) contrôlant la parité du contenu du registre tampon (95), le signal d'erreur de parité provenant de la logique de contrôle de parité étant sélectionné par le flanc arrière de l'impulsion qui charge le registre tam-pon (95).

Fig.1

Fig.2

Fig.3

Fig.4